**Europäisches Patentamt**

**European Patent Office**

**Office européen des brevets**

(11) Veröffentlichungsnummer : **0 140 202**
**B1**

(12) **EUROPÄISCHE PATENTSCHRIFT**

(45) Veröffentlichungstag der Patentschrift :
04.05.88

(21) Anmeldenummer : 84111855.7

(22) Anmeldetag : 04.10.84

(51) Int. Cl.⁴ : **B 21 F 3/08**, F 16 F 1/10,
F 03 G 1/02

(54) Verfahren zur Herstellung einer spiralförmigen Triebfeder.

(30) Priorität : 14.10.83 CH 5607/83

(43) Veröffentlichungstag der Anmeldung :
08.05.85 Patentblatt 85/19

(45) Bekanntmachung des Hinweises auf die Patenterteilung : 04.05.88 Patentblatt 88/18

(84) Benannte Vertragsstaaten :
BE DE FR GB IT NL SE

(56) Entgegenhaltungen :
CH-A- 232 211
CH-A- 353 939
GB-A- 1 341 579

(73) Patentinhaber : Baumann & Cie. AG
Ferrachstrasse 31
CH-8630 Rüti (CH)

(72) Erfinder : Siebers, Gunter
Zürcherstrasse 79
CH-8640 Rapperswil (CH)

(74) Vertreter : Scheidegger, Zwicky, Werner & Co.
Stampfenbachstrasse 48 Postfach
CH-8023 Zürich (CH)

## Beschreibung

Die vorliegende Erfindung betrifft ein Verfahren zur Herstellung einer aus einem Federband spiralförmig gewundenen Triebfeder, die zum Einbau in ein Federhaus mit einem darin drehbaren Federkern bestimmt ist, wobei die aussenliegende Endpartie der Triebfeder zum Befestigen am Federhaus und die innenliegende Endpartie der Triebfeder zum Befestigen am Federkern vorgesehen sind.

Weiter bezieht sich die Erfindung auf ein Verfahren zur Herstellung einer Vorrichtung mit einem Federhaus und einer darin untergebrachten, spiralförmig gewundenen Triebfeder, die zum Antreiben eines im Federhaus drehbaren Federkernes dient.

Eine aus einem spiralförmig gewundenen Federband bestehende Triebfeder wird in der Regel zur Speicherung und nachfolgenden Abgabe von mechanischen Drehmomenten verwendet. Es ist schon seit längerer Zeit bekannt, dass die Federcharakteristik einer solchen Triebfeder für manche Anwendungszwecke in vorteilhafter Weise verändert werden kann, indem man das Federband, nachdem es spiralförmig zu einem ersten Wickel gewunden worden ist, entgegen dem ursprünglichen Biegesinn nochmals spiralförmig aufwickelt. Der so entstehende zweite Wickel lässt sich als Triebfeder mit einer nichtlinearen Drehmoment-Charakteristik verwenden, gemäss welcher das von der Triebfeder erzeugte Drehmoment in Funktion der Umdrehungen des innenliegenden Endes relativ zum aussenliegenden Ende der Triebfeder anfänglich viel rascher ändert als in einem anschliessenden grösseren Bereich der Anzahl Umdrehungen. Die Herstellung einer derartigen Triebfeder ist z. B. in der britischen Patentschrift GB-A-1 341 579 offenbart, welche der amerikanischen Patentschrift US-A-3 788 631 entspricht. Gemäss diesen Druckschriften wird bei der Bildung des zweiten Wickels das Federband ausgehend vom inneren Ende des ersten Wickels nochmals, aber mit entgegengesetztem Biegesinn, spiralförmig gewickelt, so dass beim zweiten Wickel das gleiche Ende des Federbandes innen liegt wie beim ersten Wickel. Das andere Ende des Federbandes liegt sowohl beim ersten als auch beim zweiten Wickel aussen. Dieses Herstellungsverfahren hat zur Folge, dass die am stärksten gebogenen inneren Windungen des ersten Wickels bei der Bildung des zweiten Wickels wiederum am stärksten in entgegengesetzter Richtung gebogen werden, so dass in den meisten Fällen die Elastizitätsgrenze des Federbandmaterials überschritten und eine plastische Materialverformung eintritt, wodurch die betreffenden innersten Windungen des als Triebfeder dienenden zweiten Wickels die ihnen zugedachte elastische Wirkung nicht mehr voll entfalten können. Weiter werden die am wenigsten stark gebogenen äusseren Windungen des ersten Wickels bei der Bildung des zweiten Wickels wiederum am wenigsten stark in entgegengesetzter Richtung gebogen, weshalb auch die äusseren Windungen der resultierenden Triebfeder nur in relativ geringem Mass als elastische Drehmomentspeicher wirksam sein können. Demgemäss ist bei dieser bekannten Triebfeder der nutzbare Umdrehungsbereich, in welchem das Drehmoment nur wenig ändert, im Vergleich zu dem gesamten zur Verfügung stehenden Umdrehungsbereich nicht sonderlich gross. Dies führt auch dazu, dass der Gewichts-Nutzwert, d. h. das Verhältnis der nutzbaren Federarbeit zum Federgewicht, relativ niedrig ist. Ausserdem zeigt sich bei der Verwendung einer solchen Triebfeder in einem Federhaus eine ausgeprägte Hysterese der Drehmoment-Charakteristik, d. h. dass in den Phasen des Spannens und Entspannens der Triebfeder verhältnismässig grosse Drehmomentunterschiede bei gleichen Drehstellungen des inneren zum äusseren Ende des Federbandes resultieren. Schliesslich ist nach etwa 100'000 Arbeitszyklen ein Drehmomentverlust von etwa 20 % infolge von Materialermüdung festzustellen.

In der schweizerischen Patentschrift CH-A-353 939 sind eine Triebfeder und ein Verfahren zu deren Herstellung beschrieben, bei welchem Verfahren ein Federband zunächst spiralförmig zu einem ersten Wickel mit satt aneinanderliegenden Windungen gewickelt und nachher ein zweiter, zur Verwendung als Triebfeder bestimmter Wickel dadurch gebildet wird, dass man das Federband, ausgehend vom aussenliegenden Ende des ersten Wickels, zu einem zweiten Wickel umwickelt, dessen Windungen entgegen dem Biegesinn des Federbandes im ersten Wickel gebogen sind. Durch dieses Vorgehen lassen sich einige der oben beschriebenen Nachteile reduzieren. Insbesondere ist es möglich, bei der Bildung des zweiten Wickels eine gleichmässigere elastische Biegebeanspruchung des Federbandes zu erzielen. Allerdings hat sich in der Praxis gezeigt, dass meistens die Elastizitätsgrenze des Federmaterials in den innersten paar Windungen des zweiten Wickels überschritten wird und eine plastische Verformung des Federbandes eintritt, so dass die innersten paar Windungen der Triebfeder nicht mehr die gewünschte elastische Wirkung ausüben können und zur Drehmomentspeicherung nur wenig bis gar nichts beizutragen vermögen.

Aus der schweizerischen Patentschrift CH-A-232 211 ist ein Federmotor bekannt, der zwei drehbare Rollen mit parallelen Achsen sowie ein Federband aufweist, dessen eines Ende an der ersten Rolle und dessen anderes Ende an der zweiten Rolle befestigt ist, wobei das Federband unter dem Einfluss seiner Elastizität die Tendenz hat, sich spiralförmig auf der ersten Rolle aufzuwickeln. Beim Aufziehen dieses Federmotors wird die zweite Rolle so gedreht, dass das Federband von der ersten Rolle abgezogen und mit umgekehrtem Biegesinn auf die zweite Rolle aufgewickelt wird, wobei die am ersten Wickel aussenliegende Endpartie des Federbandes die innenliegende Endpartie des zweiten Wickels bildet. Das auf diese Weise im zweiten Wickel gespeicherte mechanische Drehmoment ist in einem relativ weiten Bereich annähernd konstant, und die Beanspruchung des Federbandmaterials beim Umwickeln mit entgegengesetztem Biegesinn ist in den inneren und äusseren Windungen annähernd gleich. Ein Ueberschreiten der Elastizitätsgrenze ist dabei aber nicht ausgeschlossen. Als hauptsächlicher Nachteil eines Federmotors dieser Art ist sein grösserer Platzbedarf zu nennen, der durch die Notwendigkeit von zwei parallelen drehbaren Rollen bedingt ist. Ein weiterer wesentlicher Nachteil dieses Federmotors ist darin zu sehen, dass infolge der im Betrieb fortwährend nötigen Umbiegungen des Federbandes vom einen in den entgegengesetzten Biegesinn und umgekehrt Materialermüdungen auftreten, die zu einem Verlust an Elastizität oder gar zum Bruch des Federbandes führen können und daher die Anzahl der nutzbaren Arbeitszyklen merklich herabsetzen. Um diesem Nachteil zu begegnen, ist eine wesentlich stärkere Dimensionierung des Federbandes erforderlich, wodurch der Platzbedarf des Motors weiter erhöht und das Verhältnis der nutzbaren Federarbeit zum Gewicht des Motors vermindert wird.

Der vorliegenden Erfindung liegt nun die Aufgabe zugrunde, ausgehend von dem durch die schweizerische Patentschrift CH-A-353 939 bekannt gewordenen Stand der Technik die eingangs genannten Verfahren zur Herstellung einer Triebfeder bzw. einer Vorrichtung mit einem Federhaus und einer darin untergebrachten Triebfeder derart auszugestalten, dass ein bisher unerreicht hohes Verhältnis der nutzbaren Federarbeit zum Gewicht der Feder sowie eine Drehmoment-Charakteristik mit einem steileren Anstieg des Anfangsdrehmomentes und mit einem flacheren Drehmomentverlauf in einem vergrösserten nutzbaren Umdrehungsbereich bei deutlich vermindertem Hysterese-Effekt resultieren.

Diese Aufgaben sind durch die in den unabhängigen Patentansprüchen definierte Erfindung gelöst. Zweckmässige und vorteilhafte Ausgestaltungen und Weiterbildungen der erfindungsgemässen Lehren ergeben sich aus den abhängigen Patentansprüchen.

Einzelheiten und Vorteile der Erfindung sind in der nun folgenden Beschreibung anhand eines Ausführungsbeispiels und im Vergleich zum Stand der Technik näher erläutert unter Bezugnahme auf die zugehörigen, rein beispielsweise wiedergegebenen Zeichnungen.

Fig. 1 zeigt in schematisierter Darstellung einen radialen Querschnitt durch eine automatische Aufrollvorrichtung mit einem Federhaus, einer darin angeordneten spiralförmig gewundenen Triebfeder und einem drehbaren Federkern ;

Fig. 2 stellt die gleiche Vorrichtung in einem achsialen Schnitt längs der Linie II-II in Fig. 1 dar ;

Fig. 3 zeigt in schematischer Darstellung einen aus einem Federband spiralförmig gewundenen ersten Wickel, der eine Zwischenstufe in der Herstellung der Triebfeder für die Vorrichtung nach den Fig. 1 und 2 ist ;

Fig. 4 ist eine zu Fig. 3 analoge Darstellung eines zweiten Wickels, der aus dem ersten Wickel nach Fig. 3 durch Umwickeln des Federbandes mit entgegengesetztem Biegesinn entstanden ist und als Triebfeder in das Federhaus der Vorrichtung gemäss den Fig. 1 und 2 einbaubar ist ;

Fig. 5 zeigt die mit der Vorrichtung gemäss den Fig. 1 und 2 erzielte Drehmoment-Charakteristik in Abhängigkeit von den Umdrehungen des Federkernes ;

Fig. 6 stellt eine analoge Drehmoment-Charakteristik einer ähnlichen Vorrichtung mit einer Triebfeder gemäss dem Stand der Technik dar ;

Fig. 7 ist eine der Fig. 1 analoge Darstellung einer die Drehmoment-Charakteristik gemäss Fig. 6 zeigenden Vorrichtung gemäss dem Stand der Technik ; und

Fig. 8 stellt die Triebfeder der Vorrichtung nach Fig. 7 nach dem Ausbauen aus dem Federhaus dar.

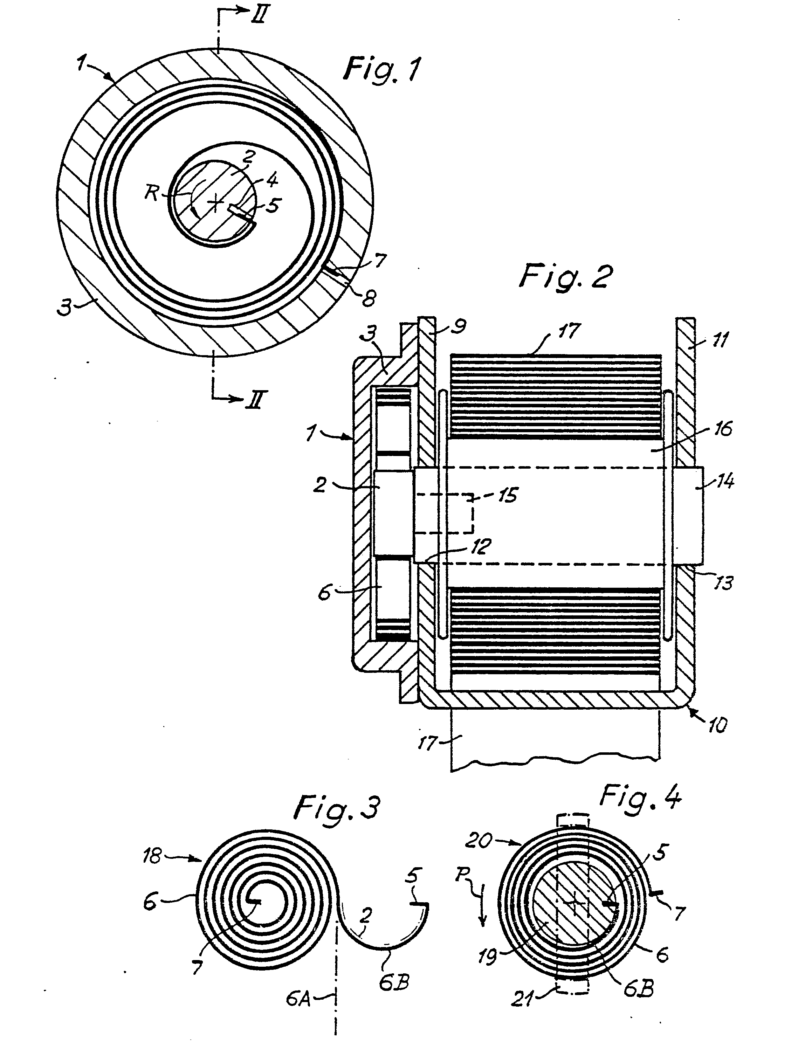

Die in den Fig. 1 und 2 gezeigte Aufrollvorrichtung weist ein Federhaus 1 und einen darin drehbaren Federkern 2 auf, dessen Durchmesser zweckmässig etwa 1/3 des Innendurchmessers der Umfangswand 3 des Federhauses 1 beträgt. In einem radialen Schlitz 4 des Federkernes 2 ist eine abgewinkelte Endpartie 5 eines Federbandes 6 verankert, welches spiralförmig um den Federkern 2 gewickelt ist. Die aussenliegende Endpartie 7 des Federbandes 6 ist in einen radialen Schlitz 8 in der Umfangswand 3 des Federhauses 1 eingehängt. Gemäss Fig. 2 ist das Federhaus 1 an einem Schenkel 9 eines U-förmigen Lagerbügels 10 befestigt, dessen anderer Schenkel mit 11 bezeichnet ist. In jedem der Schenkel 9 und 11 befindet sich eine Lagerbohrung 12 bzw. 13, in welcher die eine bzw. andere Endpartie einer Welle 14 drehbar gelagert ist. Der bereits erwähnte Federkern 2 weist einen achsialen Kupplungsfortsatz 15 auf, der in das eine Ende der Welle 14 eingreift und mit letzterer auf Drehung verbunden ist. Die Welle 14 trägt eine mit ihr drehfest verbundene Aufrolltrommel 16, an welcher ein Ende eines biegsamen Bandes 17 befestigt ist, das z. B. ein Sicherheitsgurt in einem Motorfahrzeug sein kann.

Unter dem Einfluss seiner Elastizität ist das gewickelte Federband 6 bestrebt, den Federkern 2 entgegen dem Pfeil R in Fig. 1 zu drehen und damit die Aufrolltrommel 16 anzutreiben, derart dass das Band 17 auf der Trommel 16 aufgerollt wird. Das gewickelte Federband 6 dient somit als Triebfeder zum selbsttätigen Antrieb der Aufrolltrommel 16. Beim Ausziehen des Bandes 17 wird der Federkern 2 im Sinne des Pfeiles R in Fig. 1 gedreht, wobei das Federband 6 auf den Federkern 2 aufgewickelt und die Triebfeder gespannt wird.

Die Triebfeder der Vorrichtung nach den Fig. 1 und 2 wird wie folgt hergestellt : Das Federband 6, das zweckmässig aus texturgewalztem Bandfederstahl besteht, wird zunächst auf bekannte Weise spiralförmig zu einem ersten Wickel 18 (Fig. 3) mit satt aneinanderliegenden Windungen gewunden, wobei die innenliegende Endpartie 7 abgewinkelt wird. Dann wird die äussere Endpartie 6A des Federbandes 6 aus ihrem noch ungewundenen, etwa geradlinig verlaufenden Zustand entgegen dem Biegesinn der Windungen des Wickels 18 kreisbogenförmig nach aussen gebogen, so dass ein Endbogen 6B entsteht, der sich über mindestens 30°, aber höchstens 360° erstreckt, vorzugsweise über etwa 180°. Der Krümmungsradius des Endbogens 6B wird zunächst etwas geringer als der Radius des Federkernes 2 der Vorrichtung gemäss den Fig. 1 und 2 gemacht, so dass nach dem unvermeidlichen Zurückfedern des Endbogens 6B der Krümmungsradius praktisch mit dem Radius des Federkernes 2 übereinstimmt. Wie in Fig. 3 ersichtlich ist, schliesst der Endbogen 6B unmittelbar und kontinuierlich übergehend an die äusserste Windung des Wickels 18 an. Zwischen dem Endbogen 6B und der äussersten Windung ist somit weder eine geradlinige Zwischenpartie noch ein Knick vorhanden. Die Endpartie 5 am freien Ende des Endbogens 6B wird um etwa 90° zum Krümmungszentrum des Endbogens hin abgewinkelt. Die in Fig. 3 gezeigte Form des Federbandes 6 wird nachher durch Anlassen bei einer Temperatur zwischen 180° und 260°, vorzugsweise bei etwa 210° während etwa 1 Stunde, stabilisiert. Bei dieser Wärmebehandlung wird die Elastizitätsgrenze des Federbandmaterials, d. h. dessen Widerstand gegen Formänderungen, deutlich gesteigert. Das auf die beschriebene Weise geformte und behandelte Federband 6 wird nachher mit seiner aussenliegenden abgewinkelten Endpartie 5 an einem Wickeldorn 19 (Fig. 4) befestigt, dessen Radius mit dem Krümmungsradius des Endbogens 6B des Federbandes 6 praktisch übereinstimmt oder wenig kleiner ist. Anschliessend wird durch Drehen des Wickeldornes 19 im Sinne des Pfeiles P das Federband 6 vollständig auf dem Wickeldorn 19 aufgewickelt, und zwar so, dass das Federband 6 entgegen dem ursprünglichen Biegesinn der Windungen des Wickels 18 gebogen wird, ohne dass dabei die Elastizitätsgrenze des Federbandmaterials jemals überschritten wird. Hierdurch entsteht ein zweiter Wickel 20 (Fig. 4), dessen satt aneinander anliegende Windungen eine relativ hohe elastische Biegevorspannung aufweisen. Der so gebildete zweite Wickel 20 wird dann mit Hilfe eines abnehmbaren Festhaltemittels 21, z. B. einer Klammer oder Bandage, gegen Zurückfederung gesichert und vom Wickeldorn 19 achsial abgezogen. Damit ist der zweite Wickel 20 zur Verwendung als Triebfeder im Federhaus 1 der Vorrichtung gemäss den Fig. 1 und 2 bereit.

Beim Einbauen der Triebfeder in das vom Lagerbügel 10 abgenommene und damit offene Federhaus 1 wird die nunmehr am zweiten Wickel 20 aussenliegende abgewinkelte Endpartie 7 des Federbandes 6 im Schlitz 8 der Umfangswand des Federhauses 1 verankert. Dann wird der Federkern 2 anstelle des Wickeldornes 19 in den Wickel 20 achsial eingeführt, wobei die innenliegende abgewinkelte Endpartie 5 des Federbandes 6 in Eingriff mit dem Schlitz 4 des Federkernes 2 gebracht wird. Nachher entfernt man das Festhaltemittel 21 und lässt den Wickel 20 sich entspannen, wobei seine Windungen sich radial nach aussen bewegen und sich an der Umfangswand 3 des Federhauses 1 abstützen. Schliesslich bringt man den Kupplungsfortsatz 15 des Federkernes 2 in Kupplungseingriff mit der Welle 14 der Aufrolltrommel 16 und befestigt das Federhaus 1 am Schenkel 9 des Lagerbügels 10. Das Federband 6 und der Federkern 2 haben nachher die in Fig. 1 gezeigten Positionen.

Anstelle des beschriebenen Vorgehens ist es auch möglich, beim Einbauen der Triebfeder in das Federhaus 1 zuerst die innere Endpartie 5 des zweiten Wickels 20 am Federkern 2 zu befestigen und nachher die aussenliegende Endpartie 7 mit dem Schlitz 8 der Umfangswand 3 des Federhauses in Eingriff zu bringen. Weiter ist es bei geeigneter Ausbildung des Federhauses und des Festhaltemittels 21 auch möglich, den Federkern 2 mit der Welle 14 der Aufrolltrommel 16 zu kuppeln bevor man den Wickel 20 sich entspannen lässt. Auf diese Weise erreicht man, dass beim Entspannen des Wickels 20 die Aufrolltrommel 16 mittels des Federkernes 2 in Drehung versetzt wird. Diese Drehbewegung der Aufrolltrommel 16 kann dazu benutzt werden, um das Band 17 auf der Trommel 16 aufzuwickeln.

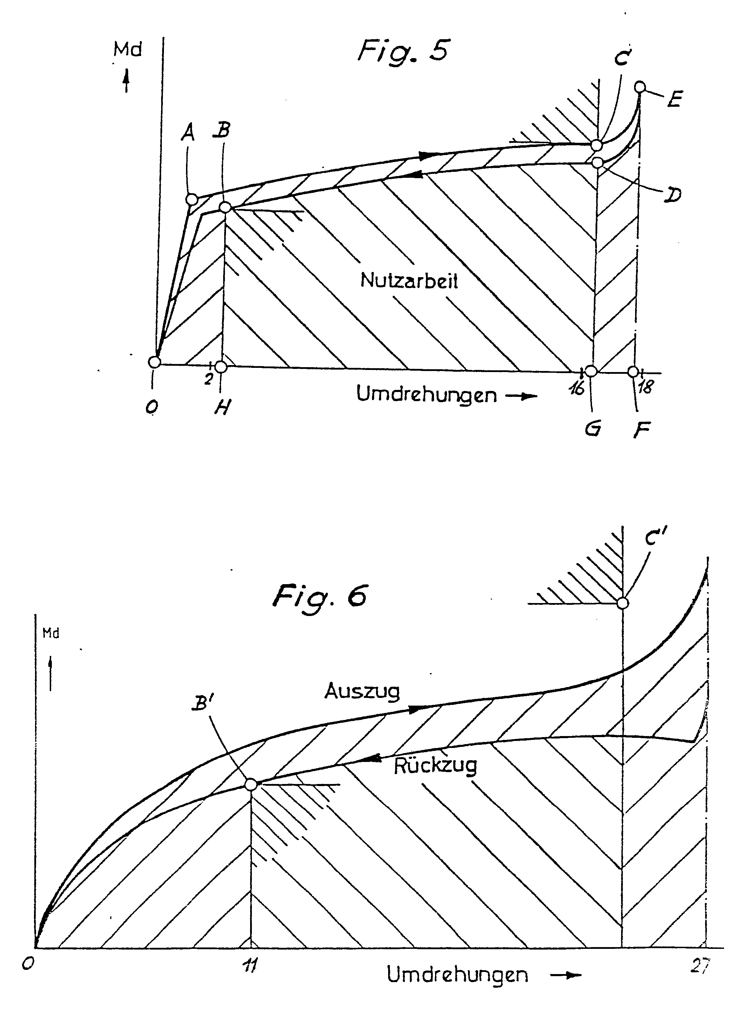

Die Drehmoment-Charakteristik der Vorrichtung nach den Fig. 1 und 2 ist in Fig. 5 veranschaulicht, welche den Drehmomentverlauf in Funktion der Umdrehung des Federkernes 2 zeigt. Die Drehmoment-Charakteristik gemäss Fig. 5 resultierte bei einem Ausführungsbeispiel der beschriebenen Vorrichtung mit den folgenden Abmessungen :

Innendurchmesser des Federhauses 1 :
55 mm
Durchmesser des Federkernes 2 :
18,7 mm
Länge des Federbandes 6 : 3 700 mm
Dicke des Federbandes 6 : 0,21 mm
Breite des Federbandes 6 : 6,7 mm

Der Nullpunkt der Abszissenachse und der Ordinatenachse des Diagrammes gemäss Fig. 5 bezieht sich auf die in Fig. 1 dargestellte Drehstellung des Federkernes 2. Beim Ausziehen des aufgerollten biegsamen Bandes 17, d. h. beim Drehen des Federkernes 2 gemäss dem Pfeil R in Fig. 1, muss auf den Federkern ein Drehmoment Md ausgeübt werden, dessen Verlauf in Funktion der Umdrehungszahl durch die obere Kurve in Fig. 5 dargestellt ist. Beim Einrollen des Bandes 17 vermag die gespannte Triebfeder dem Federkern 2 ein Drehmoment zu verleihen, dessen Verlauf durch die untere Kurve in Fig. 5 gezeigt ist. Man erkennt, dass die Hysterese, d. h. der Unterschied zwischen der oberen und der unteren Drehmomentkurve in Fig. 5 verhältnismässig gering ist. Weiter ist ersichtlich, dass das Drehmoment Md im Bereich von 0 bis etwa 1 1/2 Umdrehungen des Federkernes 2 relativ steil bis zu einem Punkt A ansteigt bzw. von einem Punkt B abfällt und dass in einem verhältnismässig grossen Umdrehungsbereich der von weniger als zwei Umdrehungen bis etwa 16 Umdrehungen des Federkernes reicht, der Verlauf des Drehmomentes ziemlich flach ist bis zu den Punkten C bzw. D. Im Bereich zwischen 16 und knapp 18 Umdrehungen des Federkernes 2 ergibt sich wieder ein steiler Verlauf der Drehmomentkurven, weil dann praktisch das ganze Federband 6 auf den Federkern 2 aufgewickelt ist. Von insgesamt knapp 18 Umdrehungen des Federkernes sind somit etwa 14 Umdrehungen voll nutzbar bei nur geringfügig sich änderndem Drehmoment. Das ganze mögliche Arbeitsvermögen der Triebfedervorrichtung ist durch die Fläche innerhalb der Punkte O, A, C, E, F und O gegeben. Davon nutzbar ist der Arbeitsbereich, welcher durch die Fläche innerhalb der Punkte B, D, G und H in Fig. 5 wiedergegeben ist. Das Verhältnis der Nutzarbeit zu der möglichen Gesamtarbeit ist daher recht gross.

Diese vorteilhaften Wirkungen kommen hauptsächlich dadurch zustande, dass praktisch die ganze Länge des Federbandes 6 im Federhaus 1 biegeelastisch wirksam ist, weil wegen der Anformung des kreisbogenförmig verlaufenden Endbogens 6B an der äussersten Windung des ersten Wickels 18 und der nachfolgenden Wärmebehandlung des ersten Wickels mit Sicherheit vermieden ist, dass bei der Bildung des zweiten Wickels 20 mit umgekehrtem Biegesinn des Federbandes 6 an irgendeiner Stelle desselben die Elastizitätsgrenze überschritten wird.

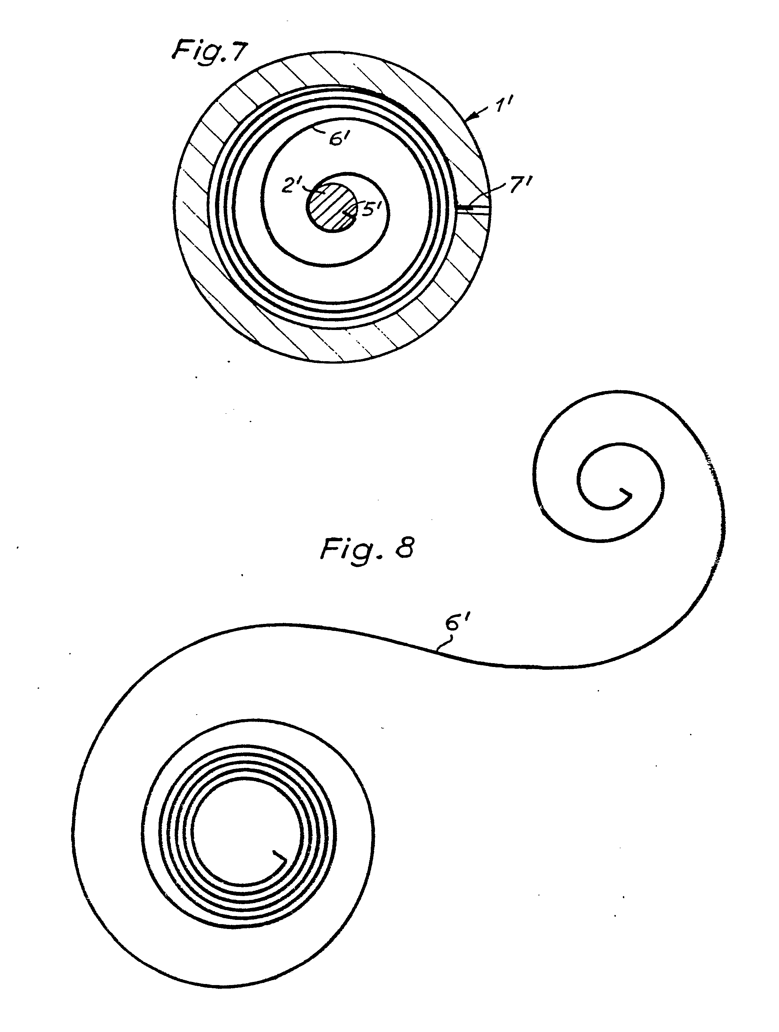

Um den durch die Erfindung ermöglichten technischen Fortschritt gegenüber dem Stand der Technik deutlich zu machen, ist ein Vergleich mit den Eigenschaften einer herkömmlichen Triebfedervorrichtung mit ähnlichen Abmessungen angezeigt. Es wird zunächst auf Fig. 7 verwiesen, in welcher der mechanische Aufbau einer solchen Vorrichtung gemäss dem Stand der Technik veranschaulicht ist. In einem Federhaus 1', dessen Innendurchmesser mit jenem des Federhauses 1 der Vorrichtung nach den Fig. 1 und 2 übereinstimmt, befindet sich eine aus einem spiralförmig gewundenen Federband 6' gebildete Triebfeder. Das in Fig. 7 innere Ende 5' des Federbandes 6' ist an einem drehbaren Federkern 2' befestigt, während das aussenliegende Ende 7' des Federbandes 6' mit dem Federhaus 1' verbunden ist. Soweit besteht Uebereinstimmung mit der Vorrichtung nach den Fig. 1 und 2. Unterschiedlich sind die Ausbildung und die Herstellung der Triebfeder : Aus dem Federband 6' wurde zwar ebenfalls ein erster Wickel mit satt aneinander anliegenden Windungen gebildet, wonach das Federband 6' entgegen dem Biegesinn der Windungen des ersten Wickels umgewickelt wurde. Letzteres wurde nach dem Stand der Technik aber ohne vorhergehendes Anformen des Endbogens 6B und nachfolgende Wärmebehandlung des ersten Wickels durchgeführt (Fig. 3). Das am ersten Wickel aussen liegende Ende des Federbandes 6', d. h. das Ende der äussersten Windung des ersten Wickels, wurde lediglich an einem (nicht gezeichneten) Wickeldorn befestigt. Bei dem anschliessenden Umwickeln des Federbandes wurde in den ersten paar Windungen des nun entstehenden zweiten Wickels die Elastizitätsgrenze des Federbandmaterials überschritten, so dass eine plastische Verformung dieser Windungen eintrat, zumal gemäss dem Stand der Technik ein Wickeldorn mit relativ kleinem Durchmesser verwendet wurde, um den Aussendurchmesser des zweiten Wickels nicht zu gross werden zu lassen.

Wenn man eine auf die beschriebene Weise gemäss dem Stand der Technik gebildete Triebfeder wieder aus dem Federhaus 1' ausbaut und sich entspannen lässt, nimmt sie unter dem Einfluss ihrer Elastizität etwa die in Fig. 8 gezeigte Form an. Man erkennt, dass diese Form nicht mehr mit jener des ersten Wickels übereinstimmt, sondern im wesentlichen S-förmig ist, weil die unmittelbar auf dem Wickeldorn aufgelegenen Windungen plastisch deformiert sind. Im Gegensatz hierzu nimmt die Triebfeder gemäss der Erfindung nach dem Ausbau aus dem Federhaus 1 von selbst wieder annähernd die in Fig. 3 dargestellte Gestalt an, weil bei dem Umwickeln die Elastizitätsgrenze des Federbandmaterials an keiner Stelle überschritten wurde und demgemäss keine plastische Verformung eintrat.

In der Vorrichtung gemäss Fig. 7 sind die plastisch deformierten Windungen des Federbandes 6' natürlich nicht mehr imstande, eine Federwirkung in dem gewünschten Sinn auf den Federkern 2' auszuüben. Das zeigt sich deutlich in der zugehörigen Drehmoment-Charakteristik gemäss Fig. 6. Dazu ist vorerst zu bemerken, dass das Federband 6' eine grössere Länge und einen grösseren Querschnitt als das Federband 6 aufweisen muss, damit ein etwa gleich grosser nutzbarer Umdrehungsbereich und in diesem annähernd gleich grosse Drehmomente resultieren wie bei der Vorrichtung gemäss den Fig. 1 und 2 und mit der Drehmoment-Charakteristik gemäss Fig. 5. Die in Fig. 6 dargestellte Drehmoment-Charakteristik gemäss dem Stand der Technik lässt klar erkennen, dass von der in Fig. 7 gezeigten Ausgangsstellung des Federkernes 2' ausgehend etwa 11 Umdrehungen von insgesamt 27 möglichen Umdrehungen des Federkernes erforderlich sind, um das nutzbare Anfangsdrehmoment zu erreichen. Ferner ist ersichtlich, dass sich der Drehmomentverlauf nur allmählich und stetig verändert und dass sich ein verhältnismässig starker Hysterese-Effekt bemerkbar macht. Ohne weiteres ist auch erkennbar, dass das Verhältnis des nutzbaren Arbeitsbereiches zum gesamten möglichen Arbeitsvermögen der Triebfedervorrichtung relativ klein und viel ungünstiger ist als bei dem erfindungsgemässen Ausführungsbeispiel. Da die Triebfeder der zum Stand der Technik gehörenden Vorrichtung nach Fig. 7 — wie erwähnt — mehr Werkstoff aufweisen muss, um den gleichen nutzbaren Umdrehungsbereich bei etwa gleichen Drehmomenten wie im Falle der erfindungsgemässen Ausbildung zu ermöglichen, ist der Gewichts-Nutzwert, d. h. das Verhältnis der nutzbaren Federarbeit zum Federgewicht, bei der Vorrichtung gemäss dem Stand der Technik geringer. Die Triebfeder gemäss dem Stand der Technik benötigt demgemäss auch mehr Einbauraum.

Schliesslich ist noch zu erwähnen, dass die nach dem Stand der Technik ausgebildete Triebfeder nach etwa 100'000 Lastwechseln infolge Ermüdung des Federbandmaterials einen erheblichen Drehmomentverlust zeigt, der in der Grössenordnung von 20 % liegt. Um diesem Drehmomentverlust Rechnung zu tragen, ist man gezwungen, die Feder für ein mindestens 25 % höheres Drehmoment zu dimensionieren, damit auch nach mehr als 100'000 Lastwechseln noch ein ausreichend grosses nutzbares Drehmoment zur Verfügung steht. Ueberraschenderweise hat sich bei der erfindungsgemässen Herstellung der Triebfeder gezeigt, dass der sich einstellende Drehmomentverlust auf ein deutlich kleineres Mass in der Grössenordnung von 5 % vermindert ist, so dass sich in dieser Hinsicht eine Verbesserung um etwa 20 % gegenüber dem Stand der Technik ergibt.

**Patentansprüche**

1. Verfahren zur Herstellung einer aus einem Federband (6) spiralförmig gewundenen Triebfeder zum Einbau in ein Federhaus (1) mit einem darin drehbaren Federkern (2), wobei die aussenliegende Endpartie (7) der Triebfeder zum Befestigen am Federhaus (1) und die innenliegende Endpartie (5) der Triebfeder zum Befestigen am Federkern (2) bestimmt sind, bei welchem Verfahren man das Federband (6) zu einem ersten Wickel (18) mit satt aneinanderliegenden Windungen windet und nachher, ausgehend vom aussenliegenden Ende (5) des ersten Wickels (18), zu einem die Triebfeder bildenden zweiten Wickel (20) spiralförmig umwickelt, dessen Windungen entgegen dem Biegesinn der Windungen des ersten Wickels (18) gebogen sind und satt aneinander anliegen, dadurch gekennzeichnet, dass man eine am ersten Wickel (18) aussenliegende, noch ungewundene Endpartie (6A) des Federbandes (6) entgegen dem Biegesinn der Windungen des ersten Wickels (18) kreisbogenförmig um mindestens 30°, aber höchstens 360°, biegt zur Bildung eines an die äusserste Windung des ersten Wickels (18) unmittelbar und mit kontinuierlichem Uebergang anschliessenden Endbogens (6B) mit einem Krümmungsradius, der etwa gleich dem Radius des Federkernes (2) oder wenig grösser ist, dass man nachher das Ganze einer Wärmebehandlung zum Anlassen des Federbandmaterials unterwirft, dass man nach dieser Wärmebehandlung den kreisbogenförmig verlaufenden Endbogen (6B) des Federbandes (6) an einem Wickeldorn (19) befestigt, dessen Radius gleich dem Krümmungsradius des Endbogens (6B) oder wenig kleiner ist, dass man auf dem Wickeldorn (19) den zweiten Wickel (20) erzeugt, dass man die äusserste Windung des zweiten Wickels (20) durch ein abnehmbares Festhaltemittel (21) in Anlage an der nächstfolgenden Windung sichert und dass man schliesslich den Wickeldorn (19) in achsialer Richtung aus dem zweiten Wickel (20) entfernt.

2. Verfahren zur Herstellung einer Vorrichtung mit einem Federhaus (1) und einer darin untergebrachten, aus einem Federband (6) spiralförmig gewundenen Triebfeder, deren aussenliegende Endpartie (7) am Federhaus (1) befestigt ist und deren innenliegende Endpartie (5) zum Befestigen an einem im Federhaus (1) drehbaren Federkern (2) bestimmt ist, wobei man das Federband (6) zu einem ersten Wickel (18) mit satt aneinanderliegenden Windungen windet und nachher, ausgehend vom aussenliegenden Ende (5) des ersten Wickels (18), zu einem die Triebfeder bildenden zweiten Wickel (20) spiralförmig umwickelt, dessen Windungen entgegen dem Biegesinn der Windungen des ersten Wickels (18) gebogen sind und satt aneinander anliegen, dadurch gekennzeichnet, dass man eine am ersten Wickel (18) aussenliegende, noch ungewundene Endpartie (6A) des Federbandes (6) entgegen dem Biegesinn der Windungen des ersten Wickels (18) kreisbogenförmig um mindestens 30°, aber höchstens 360° biegt zur Bildung eines an die äusserste Windung des ersten Wickels (18) unmittelbar und mit kontinuierlichem Uebergang anschliessenden Endbogens (6B) mit einem Krümmungsradius, der etwa gleich dem Radius des Federkernes (2) oder wenig grösser ist, dass man nachher das Ganze einer Wärmebehandlung zum Anlassen des Federbandmaterials unterwirft, dass man nach dieser Wärmebehandlung den kreisbogenförmig verlaufenden Endbogen (6B) des Federbandes (6) an einem Wickeldorn (19) befestigt, dessen Radius gleich dem Krümmungsradius des Endbogens (6B) oder wenig kleiner ist, dass man auf dem Wickeldorn (19) den zweiten Wickel (20) erzeugt, dass man die äusserste Windung des zweiten Wickels (20) durch ein abnehmbares Festhaltemittel (21) in Anlage an der nächstfolgenden Windung sichert, dass man den Wickeldorn (19) in achsialer Richtung aus dem zweiten Wickel (20) entfernt, dass man den zweiten Wickel (20) in das Federhaus (1) einbringt, dass man die aussenliegende Endpartie (7) des zweiten Wickels (20) an der Umfangswand (3) des Federhauses (1) befestigt und dass man durch Abnehmen des Festhaltemittels (21) den zweiten Wickel (20) sich entspannen lässt, bis er sich an der Umfangswand (3) des Federhauses (1) abstützt.

3. Verfahren nach Anspruch 2, dadurch gekennzeichnet, dass man den Federkern (2) in achsialer Richtung in den zweiten Wickel (20) einführt und mit der innenliegenden Endpartie (5) desselben verbindet, wenn der zweite Wickel (20) in das Federhaus (1) eingebracht wird oder worden ist.

4. Verfahren nach Anspruch 3, dadurch gekennzeichnet, dass man den in das Federhaus (1) eingebrachten zweiten Wickel (20) sich entspannen lässt, nachdem der Federkern (2) in den zweiten Wickel (20) eingeführt und mit der innenliegenden Endpartie (5) desselben verbunden worden ist.

5. Verfahren nach Anspruch 3, dadurch gekennzeichnet, dass man den Federkern (2) mit einer Aufrolltrommel (16) verbindet und an letzterer ein Ende eines biegsamen Materialstückes (17) befestigt, dass man den Federkern (2) in den zweiten Wickel (20) achsial einführt und mit der innenliegenden Endpartie (5) desselben verbindet, bevor man den zweiten Wickel (20) sich im Federhaus (1) entspannen lässt, und dass bei dem nachfolgenden Entspannen des zweiten Wickels (20) der Federkern (2) durch die elastische Wirkung des Federbandes (6) gedreht und dabei das biegsame Materialstück (17) auf die Aufrolltrommel (16) aufgerollt wird.

6. Nach dem Verfahren nach Anspruch 2 hergestellte Vorrichtung mit einem Federhaus (1), einer darin untergebrachten, aus einem Federband (6) spiralförmig gewundenen Triebfeder und einem im Federhaus (1) drehbar gelagerten Federkern (2), wobei die aussenliegende Endpartie (7) der Triebfeder am Federhaus (1) und die innenliegende Endpartie (5) der Triebfeder am Federkern (2) befestigt sind, dadurch gekennzeichnet, dass die Länge des Federbandes (6) 15'000 bis 20'000 mal grösser als die Dicke des Federbandes ist und dass die Dicke des Federbandes (6) 20 bis 60, vorzugsweise etwa 50 mal kleiner als der Radius des Federkernes (2) ist.

## Claims

1. A process for the manufacture of a mainspring wound spirally from a spring band (6) for mounting in a spring housing (1) with a spring core (2) rotatable therein, wherein the externally lying end part (7) of the mainspring is to be secured at the spring housing (1) and the internally lying end part (5) of the mainspring is to be secured at the spring core (2), in which process the spring band (6) is wound to a first coil (18) with tightly adjacently lying turns and thereafter, starting from the externally lying end (5) of the first coil (18), is rewound spirally to a second coil (20) to form the mainspring the turns of which are bent oppositely to the direction of bending of the turns of the first coil (18) and lie tightly adjacently to each other, characterised in that the externally lying, still unwound end part (6A) of the spring band (6) of the first coil (18) is bent about at least 30° but at most 360° to a circular arc in a direction opposite to the direction of bending of the turns of the first coil (18) in order to form an end arch (6B) adjoining directly the outermost turn of the first coil (18) with a continuous transition and with a radius of curvature which is approximately equal to the radius of the spring core (2) or is a little larger ; in that thereafter the whole is subjected to a heat treatment to temper the spring band material ; in that after this heat treatment the end arch (6B) of the spring band (6) extending in a circular arc is secured to a winding mandrel (19) the radius of which is equal to the radius of curvature of the end arch (6B) or is somewhat smaller ; in that the second coil (20) is produced on the winding mandrel (19) ; in that the outermost turn of the second coil (20) is secured by means of a removable retaining means (21) bearing against the next successive turn, and finally in that the winding mandrel (19) is removed in an axial direction from the second coil (20).

2. A process for the manufacture of a device with a spring housing (1) and a mainspring accommodated therein and wound spirally from a spring band (6), the outwardly lying end part (7) of the mainspring being secured to the spring housing (1) and the inwardly lying end part (5) is destined to be secured to a spring core (2) rotatable in the spring housing (1), wherein the spring band (6) is wound to a first coil (18) with tightly adjacently lying turns and thereafter, starting from the outwardly lying end (5) of the first coil (18), is rewound spirally to a second coil (20) forming the mainspring, the turns of the second coil being bent in a direction opposite to the direction of bending of the turns of the first coil (18) and lying tightly next to each other, characterised in that an outwardly lying, not yet wound end part (6A) of the spring band (6) at the first coil (18) is bent circularly about at least 30° but at most 360° in a direction opposite to the direction of bend of the turns the first coil (18) to form an end arch (6B) adjoining directly and with continuous transition the outermost turn of the first coil (18) with a radius of curvature which is approximately equal to the radius of the spring core (2) or is slightly greater ; in that thereafter the whole is subjected to heat treatment in order to temper the material of the spring band ; in that after this heat treatment the circularly running end arch (6B) of the spring band (6) is secured to a winding mandrel (19) the radius of which is equal to the radius of curvature of the end arch (6B) or is a little smaller ; in that the second coil (20) is produced on the winding mandrel (19) ; in that the outermost turn of the second coil (20) is secured by means of a removable retaining means (21) bearing against the next following turn ; in that the winding mandrel (19) is removed in an axial direction from the second coil (20) ; in that the second coil (20) is introduced into the spring housing (1) ; in that the outwardly lying end part (7) of the second coil (20) is secured at the peripheral wall (3) of the spring housing (1) ; and in that by removing the retaining means (21) the second coil (20) is relaxed until it is supported at the peripheral wall (3) of the spring housing (1).

3. A process according to claim 2, characterised in that the spring core (2) is introduced in an axial direction into the second coil (20) and is connected with the internally lying end part (5) of the latter, when the second coil (20) is or was introduced into the spring housing (1).

4. A process according to claim 3, characterised in that the second coil (20) introduced into the spring housing (1) is allowed to relax after the spring core (2) has been introduced into the second coil (20) and connected with the internally lying end part (5) of the latter.

5. A process according to claim 3, characterised in that the spring core (2) is connected with a wind-up drum (16) and one end of a flexible material piece (17) is secured at the latter ; in that the spring core (2) is axially introduced into the second coil (20) and connected with the internally lying end part (5) of the latter before the second coil (20) is allowed to relax in the spring housing (1) ; and in that after a subsequent relaxing of the second coil (20) the spring core (2) is rotated by the elastic effect of the spring band (6) and thus the flexible material piece (17) is coiled up onto the wind-up drum (16).

6. A device made according to the process according to claim 2 with a spring housing (1) a mainspring spirally wound from a spring band (6) accommodated therein and a spring core (2) rotatably journalled in the spring housing (1), wherein the outwardly lying end part (7) of the mainspring is secured at the spring housing (1) and the inwardly lying end part (5) of the main spring is secured to the spring core (2), characterised in that the length of the spring band (6) is 15,000 to 20,000 times higher than the thickness of the spring band, and in that the thickness of the spring band (6) is 20 to 60 times, preferably approximately 50 times, smaller than the radius of the spring core (2).

## Revendications

1. Procédé de fabrication d'un ressort-moteur enroulé en spirale en un ruban pour ressort (6) pour incorporation dans un barillet (1) comportant une bonde de barillet (2) rotative, l'extrémité externe (7) du ressort-moteur étant prévue pour une fixation au barillet (1) et l'extrémité interne (5) du ressort-moteur étant prévue pour une fixation à la bonde de barillet (2), procédé dans lequel on enroule le ruban pour ressort (6) en un premier enroulement (18) avec des spires jointives, puis, en partant de l'extrémité externe (5) du premier enroulement (18), on l'enroule en spirale en un second enroulement (20) formant le ressort-moteur dont les spires sont jointives et sont fléchies dans le sens contraire au sens de flexion des spires du premier enroulement (18), caractérisé en ce que l'on fléchit une extrémité externe non enroulée (6A) du premier enroulement (18) du ruban pour ressort (6) contre le sens de flexion des spires du premier enroulement (18), en un arc de cercle d'au moins 30°, mais d'au plus 360°, pour la formation d'un arc terminal (6B) se raccordant directement et de façon continue à la spire la plus externe du premier enroulement (18) avec un rayon de courbure qui est à peu près égal au rayon de la bonde de barillet (2) ou un peu plus grand, en ce qu'ensuite l'on soumet l'ensemble à un traitement thermique pour le revenu du matériau du ruban pour ressort, en ce qu'après ce traitement thermique, on fixe l'arc terminal (6B) en forme d'arc de cercle du ruban pour ressort (6) à un axe d'enroulement (19) dont le rayon est égal au rayon de courbure de l'arc terminal (6B) ou est un peu plus petit que lui, en ce que l'on forme le second enroulement (20) sur l'axe d'enroulement (19), en ce que l'on assure la spire la plus externe du second enroulement (20) par un moyen amovible de fixation (21) en appui contre la spire suivante et en ce qu'enfin l'on retire l'axe d'enroulement (19) en direction axiale, du second enroulement (20).

2. Procédé de fabrication d'un dispositif avec un barillet (1) et un ressort-moteur enroulé à l'intérieur en spirale, en un ruban pour ressort (6) dont l'extrémité externe (7) est fixée sur le barillet (1) et dont l'extrémité interne (5) est prévue pour la fixation à une bonde de barillet (2) rotative dans le barillet (1), le ruban pour ressort (6) étant enroulé en un premier enroulement (18) avec des spires jointives puis étant enroulé en spirale, à partir de l'extrémité externe (5) du premier enroulement (18) en un deuxième enroulement (20) formant le ressort-moteur, dont les spires sont jointives et sont fléchies dans le sens contraire au sens de flexion des spires du premier enroulement (18), caractérisé en ce que l'on courbe une extrémité externe (6A) non enroulée du premier enroulement (18) du ruban pour ressort (6) contre le sens de flexion des spires du premier enroulement (18), en forme d'arc de cercle d'au moins 30° mais d'au plus 360°, pour la formation d'un arc terminal (6B) se raccordant directement et de façon continue à la spire la plus externe du premier enroulement (18), avec un rayon de courbure qui est à peu près égal au rayon de la bonde de barillet (2) ou un peu plus grand, en ce qu'ensuite l'on soumet l'ensemble à un traitement thermique pour le revenu du ruban pour ressort, en ce qu'après ce traitement thermique, on fixe l'arc terminal (6B) en forme d'arc de cercle du ruban pour ressort (6) à un axe d'enroulement (19) dont le rayon est égal au rayon de courbure de l'arc terminal (6B) ou est un peu plus petit, en ce que l'on forme le second enroulement (20) sur l'axe d'enroulement (19), en ce que l'on assure la spire la plus externe du second enroulement (20) par un moyen amovible de fixation (21), en appui sur la spire suivante, en ce que l'on retire l'axe d'enroulement (19) en direction axiale du second enroulement (20), en ce que l'on introduit le second enroulement (20) dans le barillet (1), en ce que l'on fixe l'extrémité externe (7) du second enroulement (20) à la paroi périphérique (3) du barillet (1) et en ce que l'on laisse le second enroulement (20) se détendre par retrait du moyen de fixation (21), jusqu'à ce qu'il s'appuie contre la paroi périphérique (3) du barillet (1).

3. Procédé selon la revendication 2, caractérisé en ce que l'on introduit la bonde de barillet (2) en direction axiale dans le second enroulement (20) et en ce qu'on la relie à l'extrémité interne (5) de celui-ci, lorsque le second enroulement (20) est introduit ou a été introduit dans le barillet (1).

4. Procédé selon la revendication 3, caractérisé en ce qu'on laisse le second enroulement (20) introduit dans le barillet (1) se détendre, après que la bonde de barillet (2) a été introduite dans le second enroulement (20) et a été reliée à l'extrémité interne (5) de celui-ci.

5. Procédé selon la revendication 3, caractérisé en ce qu'on relie la bonde de barillet (2) à un cylindre d'enroulement (16) et en ce qu'on fixe à ce dernier une extrémité d'une pièce flexible de matériau (17), en ce qu'on introduit axialement la bonde de barillet (2) dans le second enroulement (20), et en ce qu'on la relie à son extrémité interne (15) avant de laisser se détendre le second enroulement (20) dans le barillet (1), et en ce que, lors de la détente subséquente du second enroulement (20), la bonde de barillet (2) tourne par l'effet élastique du ruban pour ressort (6) et la pièce de matériau flexible (17) est enroulée sur le cylindre d'enroulement (16).

6. Dispositif fabriqué selon le procédé de la revendication 2, avec un barillet (1), un ressort-moteur enroulé en spirale à partir d'un ruban pour ressort (6) disposé à l'intérieur du barillet (1) et une bonde de barillet (2) logée de façon rotative dans le barillet (1), l'extrémité externe (7) du ressort-moteur étant fixée au barillet (1) et l'extrémité interne (5) du ressort-moteur étant fixée à la bonde de barillet (2), caractérisé en ce que la longueur du ruban pour ressort (6) est 15 000 à 20 000 plus grande que l'épaisseur du ruban pour ressort et en ce que l'épaisseur du ruban pour ressort (6) est de 20 à 60 fois, de préférence environ 50 fois plus petite que le rayon de la bonde de barillet (2).

Fig. 1

Fig. 2

Fig. 3

Fig. 4

Fig. 5

Nutzarbeit

Umdrehungen →

Fig. 6

Auszug

Rückzug

Umdrehungen →

Fig.7

Fig. 8